# EUROPÄISCHE PATENTSCHRIFT

(11) **EP 3 802 040 B1**
(45) Veröffentlichungstag und Bekanntmachung des Hinweises auf die Patenterteilung: **07.06.2023**
(21) Anmeldenummer: 19733964.1
(22) Anmeldetag: 06.06.2019
(51) Int. Cl.: B29C 33/20, B29C 45/66

(54) **FORMENTRÄGERSYSTEM**
MOULD SUPPORT SYSTEM
SYSTÈME DE SUPPORT DE MOULE

(30) Priorität: 08.06.2018 DE 102018113657; 20.07.2018 DE 102018117586
(43) Veröffentlichungstag der Anmeldung: 14.04.2021
(73) Patentinhaber: BBG GmbH & Co. KG, 87719 Mindelheim (DE)
(72) Erfinder: BARTON, Sebastian, 87719 Mindelheim (DE)
(74) Vertreter: Keller Schneider Patentanwaltsgesellschaft mbH
(86) Internationale Anmeldenummer: PCT/EP2019/064903
(87) Internationale Veröffentlichungsnummer: WO 2019/234206

(56) Entgegenhaltungen:
- AT-B1- 513 131
- DE-A1- 19 612 018
- DE-T2- 69 907 227
- LEANTECHNIK AG: "Gesamtkatalog", , 31. Juli 2013 (2013-07-31), XP055614331, https://leantechnik.com Gefunden im Internet: URL:https://leantechnik.com/wp-content/upl oads/2017/04/leantechnik_gesamtkatalog_lif go_leanSL_2013.pdf [gefunden am 2019-08-21]
- Bbg Gmbh: "BFT- K Formenträgersystem Mold Carrier System", , 31. Oktober 2014 (2014-10-31), XP055614395, https://www.bbg-mbh.com Gefunden im Internet: URL:https://www.bbg-mbh.com/index.php/down loads.html?file=files/Medien/Downloads/Pro spekte%20-%20Brochures/Hydraulisches%20For mentr%C3%A4gersystem%20BFT-K.pdf [gefunden am 2019-08-21]

## Beschreibung

Die Erfindung betrifft ein Formenträgersystem gemäß dem Oberbegriff des Patentanspruchs 1.

Ein gattungsgemäßes Formenträgersystem ist aus AT 513 131 B1 bekannt, bei der eine an einer Hochhalteeinrichtung angeordnete bewegliche Formenaufspannplatte mittels eines Verriegelungsantriebs wahlweise in eine von mehreren vertikal übereinander angeordneten, relativ groben Rastpositionen positionierbar ist.

Ein weiteres Formenträgersystem ist aus dem hauseigenen Firmenprospekt High Speed Systems der Anmelderin bekannt. Bei dem darin gezeigten Formenträgersystem BFT-P V7 erfolgt die Verriegelung eines Formenträgeroberteils mit einem Rahmen mittels eines Verriegelungsmittels, welches aus zwei Verriegelungsbuchsen an einer Rahmenstütze und wenigstens einem in diese Verriegelungsbuchsen eingreifenden Verriegelungsbolzen am Formenträgeroberteil gebildet wird. Dabei ist eine Verriegelungsposition des Formenträgeroberteils mit dem Rahmen nur für maximal zwei unterschiedliche Werkzeughöhen möglich.

Aus der WO 93/16828 A1 ist eine Verriegelungsvorrichtung für eine Schließvorrichtung einer Spritzgießmaschine bekannt, bei der eine Druckstange mit Rillen und Vorsprüngen versehen ist, in die korrespondierende Vorsprünge und Rillen eines mutterartigen Verriegelungsringes eingreifen.

Aus der DE 43 09 496 A1 ist eine Gießform mit einem Formenoberteil und einem Formenunterteil bekannt, das angehoben und durch Verriegelungselemente verriegelt werden kann.

Aus der DE 35 38 683 A1 ist eine Schließeinheit für Formwerkzeuge bekannt, bei der für das Absenken und Anheben der oberen Formwerkzeughälfte Langhubzylinder und zur Verkürzung der Arbeitszeit zusätzliche Kurzhubzylinder vorgesehen sind.

Eine Verwendung eines Druckluftkissens an einer Gießform ist aus DE 699 07 227 T2 für sich gesehen bekannt, dient dort aber nur zum Zwecke einer Kompensation einer Materialschrumpfung und nicht zu einer Feinpositionierung von Werkzeugen.

Aufgabe der Erfindung ist es, ein Formenträgersystem zu schaffen, mit dem eine Fein-Anpassung an unterschiedliche Werkzeughöhen in einer Vielzahl von Positionen ermöglicht wird.

Diese Aufgabe wird durch ein Formenträgersystem mit den Merkmalen des Anspruchs 1 gelöst. Vorteilhafte Ausgestaltungen der Erfindung sind in den Unteransprüchen angegeben.

Formenträgersysteme für eine Umschäumung von Glasdeckeln oder -scheiben finden beispielsweise in der Herstellung von Schiebedächern für Fahrzeuge Verwendung.

Das erfindungsgemäße Formenträgersystem umfasst einen portalartigen Rahmen mit einem relativ zum Rahmen bewegbaren Formenträgeroberteil mit einer ersten Formenaufspannplatte und ein Formenträgerunterteil mit einer zweiten Formenaufspannplatte. Des Weiteren sind am Rahmen erste Verriegelungsmittel und am Formenträgeroberteil zweite Verriegelungsmittel vorgesehen. Mittels dieser beiden Verriegelungsmittel wird ein Verriegeln des Formenträgeroberteils relativ zum Rahmen in einer variablen Verriegelungsposition ermöglicht. Die ersten und die zweiten Verriegelungsmittel werden dabei durch eine Vielzahl von gleichmäßig beabstandeten Verriegelungselementen gebildet, die in unterschiedlichen Verriegelungspositionen in Eingriff bringbar sind.

In einer vorteilhaften Ausgestaltung ist das erste Verriegelungselement als Platte und das zweite Verriegelungselement als Riegel ausgebildet. Die Verriegelungselemente des ersten und zweiten Verriegelungsmittels werden dabei von Vorsprüngen und Vertiefungen gebildet. In der Verriegelungsposition greifen sodann die Vorsprünge des Riegels in die Vertiefungen der Platte und die Vorsprünge der Platte in die Vertiefungen des Riegels. So entsteht eine Art Verzahnung der beiden Verriegelungsmittel. In einer alternativen Ausgestaltungsform kann das erste Verriegelungselement als Riegel und das zweite Verriegelungselement als Platte ausgebildet sein.

Befinden sich die beiden Verriegelungsmittel in der Verriegelungsposition, ist gemäß der Erfindung zusätzlich zwischen der Formenaufspannplatte und dem Formenträgerober- oder unterteil ein variabler Luftspalt vorgesehen. Dieser variable Luftspalt ermöglicht eine so genannte schwimmende Lagerung der Formenaufspannplatte. Durch mit veränderbaren Volumina aufblasbare oder entlüftbare Druckluftkissen zwischen Formenaufspannplatte und Formenträgerober- oder unterteil wird eine stufenlose Fein-Positionierung der Formenaufspannplatten bei unterschiedlichen Einstellungen von Werkzeughöhen ermöglicht.

Vorteilhafterweise sind die ersten und zweiten Verriegelungsmittel mittels einer Verriegelungsvorrichtung in Eingriff bringbar. Das Verriegelungselement umfasst wenigstens ein horizontal bewegbares Riegelelement, welches durch einen Antrieb verfahrbar ist. Der Antrieb kann dabei als Elektromotor, Hydraulikzylinder oder auch Pneumatikzylinder gebildet sein.

In einer besonders vorteilhaften Ausgestaltung der Erfindung ist ein Sensor zum Messen eines Abstands zwischen der ersten Formenaufspannplatte und dem Rahmen vorgesehen. Durch Lasermessung ermittelt der Sensor einen Sollwert für die Verriegelungsposition der ersten Formenaufspannplatte.

Dieser Sollwert der Verriegelungsposition wird durch ein manuelles Verfahren in einem Kriechgang ermittelt. Dabei wird die erste Formenaufspannplatte sehr langsam gegen die zweite Formaufspannplatte verfahren bis die gewünschte Verriegelungsposition erreicht ist. Der so ermittelte Sollwert kann in einer besonders vorteilhaften Weiterbildung für darauf folgende, automatisierte Verfahrvorgänge der ersten Formenaufspannplatte in einen Speicher einer speicherprogrammierbaren Steuerung (SPS) übertragen werden. Somit ist nur einmalig nach einem Wechsel eines Formwerkzeugs an der ersten Formenaufspannplatte eine Neukalibrierung des Verfahrwegs zum Schließen des oberen Formwerkzeugs gegenüber einem unteren Formwerkzeug erforderlich. Bei den anschließenden Öffnungs- und Schließvorgängen zum Erzeugen von umschäumten Bauteilen fährt die speicherprogrammierbaren Steuerung (SPS) automatisch den neu ermittelten Sollwert an.

In einem alternativen Ausführungsbeispiel kann auch das Formenträgerunterteil mit der zweiten Formenaufspannplatte verfahrbar am Rahmen gelagert sein. Dabei können beide oder auch nur eine der Formenaufspannplatten verfahrbar sein.

Nachfolgend werden Ausführungsbeispiele der Erfindung unter Bezugnahme auf die Zeichnungen näher erläutert. Es zeigt:
- Fig. 1: eine schematische perspektivische Ansicht des Formenträgersystems mit einem Formenträgeroberteil und einem Formenträgerunterteil in einem geöffnetem Zustand, wobei die daran befestigbaren Formwerkzeuge weggelassen wurden,
- Fig. 2: eine schematische perspektivische Darstellung des ersten Verriegelungsmittels an einer Portalstütze,
- Fig. 3: eine schematische Schnittdarstellung des ersten Verriegelungsmittels in Eingriff mit dem zweiten Verriegelungsmittel, welches mit der Verriegelungsvorrichtung verbunden ist,
- Fig. 4: eine schematische Schnittdarstellung durch das erste und das zweite Verriegelungsmittel in einer unverriegelten/geöffneten Position
- Fig. 5: eine schematische Schnittdarstellung durch das erste und das zweite Verriegelungsmittel in einer verriegelten Position, und
- Fig. 6: einen schematischen Teilschnitt durch die rechte Seite eines Formenträgersystems mit zusätzlichen Luftkissen für eine stufenlose Feinjustierung der Höhe einer oberen Formenaufspannplatte.

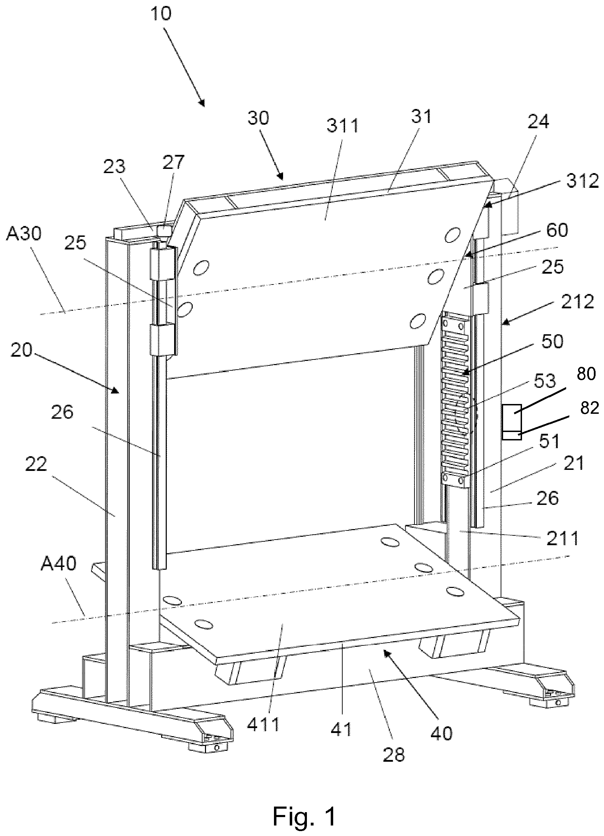

In der Figur 1 ist das Formenträgersystem 10 mit einem portalartigen Rahmen 20 dargestellt. Der Rahmen 20 wird von einer ersten Portalstütze 21, einer zweiten Portalstütze 22, einem die beiden Portalstützen 21 und 22 horizontal verbindenden oben angeordneten Joch 23 und einer die beiden Portalstützen 21 und 22 horizontal verbindenden unteren Traverse 28 gebildet. Zwischen den Portalstützen 21 und 22 sind ein Formenträgeroberteil 30 und ein Formenträgerunterteil 40 schwenkbar um die Achsen A30 und A40 angeordnet.

Die schwenkbare Lagerung dient zum bequemeren Einlegen und Entnehmen der Bauteile und zum leichteren Reinigen der Formwerkzeuge.

Das Formenträgeroberteil 30 weist dabei eine erste Formenaufspannplatte 31 mit einer Aufspannfläche 311 und das Formenträgerunterteil 40 eine zweite Formenaufspannplatte 41 mit einer Aufspannfläche 411 auf. Die Aufspannfläche 311 dient zur Befestigung eines oberen Formwerkzeugs und die Aufspannfläche 411 dient zur Befestigung eines unteren Formwerkzeugs, die aus Gründen der Zeichnungsvereinfachung beide nicht gezeigt sind.

An beiden Portalstützen 21 und 22 ist eine Laufschiene 26 mit einem darin gleitenden Führungsschlitten 25 zum vertikalen Verfahren des Formenträgeroberteils 30 vorgesehen. Die Führungsschlitten 25 werden dabei durch einen Antrieb 24 angetrieben, der beispielhaft an einer Außenseite 212 der Portalstütze 21 angeordnet ist.

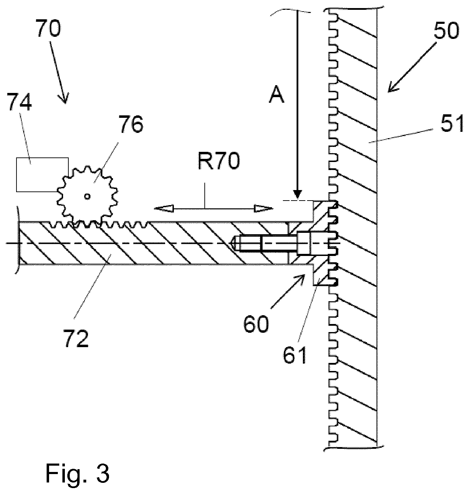

Auf einer Innenseite 211 der ersten Portalstütze 21 und auch an der zweiten Portalstütze 22 ist ein erstes Verriegelungsmittel 50 angeordnet, welches als Platte 51 ausgebildet ist und eine Vielzahl an gleichmäßig voneinander beabstandeten Verriegelungselementen 53 aufweist. An einer Außenseite 312 des Formenträgeroberteils 30 ist hierzu korrespondierend das zweite Verriegelungselement 60 angeordnet (detailliert dargestellt in den Figuren 3 bis 5).

Zum Festlegen der gewünschten Verriegelungsposition ist ein Sensor 27 zum Messen eines Abstands zwischen der ersten Formenaufspannplatte 31 und dem Rahmen 20 am Joch 23 des Rahmens 20 vorgesehen. Der Sensor 27 ermittelt dabei mittels eines Lasers einen Sollwert für die Verriegelungsposition der ersten Formenaufspannplatte 31.

Dieser Sollwert der Verriegelungsposition wird durch ein manuelles Verfahren in einem Kriech- bzw. Schleichgang ermittelt. Dabei wird die erste Formenaufspannplatte 31 nach Einbringen eines neuen Formwerkzeugs sehr langsam gegen die zweite Formaufspannplatte 41 verfahren bis die gewünschte Verriegelungsposition erreicht ist. Der so als Abstand A zwischen dem feststehenden Joch 23 und der verfahrbaren ersten Formenaufspannplatte 30 ermittelte Sollwert kann für darauf folgende, automatisierte Verfahrvorgänge der ersten Formenaufspannplatte in einen in Fig. 1 angedeuteten Speicher 82 einer speicherprogrammierbaren Steuerung (SPS) 80 übertragen werden.

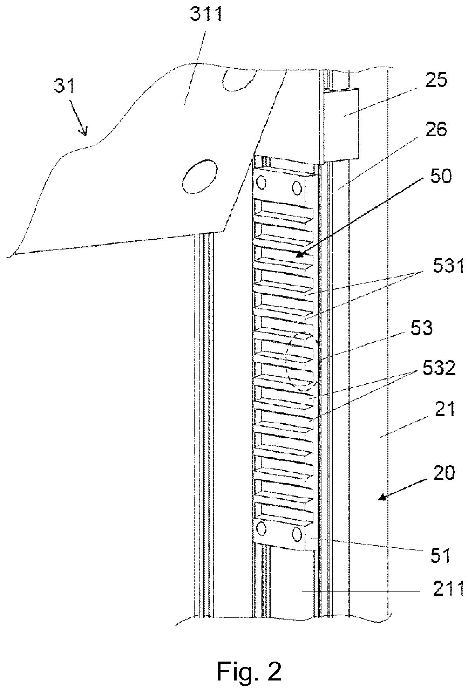

In der Figur 2 des detailliert dargestellten Verriegelungsmittels 50 ist deutlich zu erkennen, dass die Verriegelungselemente 53 als Vorsprünge 531 und Vertiefungen 532 ausgebildet sind.

Die Figur 3 zeigt eine schematische Schnittdarstellung der Verriegelungselemente 50 und 60, sowie eine mit dem Riegel 61 des zweiten Verriegelungsmittels 60 verbundene Verriegelungsvorrichtung 70. Die Verriegelungsvorrichtung 70 umfasst dabei ein horizontal bewegbares Riegelelement 72, einen Antrieb 74 für ein Zahnrad 76, welches das Riegelelement 72 in einer Bewegungsrichtung R70 verfahrbar macht. Der Antrieb kann dabei beispielsweise als Elektromotor, als Hydraulikzylinder oder auch als Pneumatikzylinder ausgebildet sein. Ein derartiger synchron horizontal verfahrbarer Riegel 61 ist auch auf der gegenüberliegenden Seite mit einer an der Innenseite der zweiten Portalstütze 22 angeordneten, nicht gezeigten, Platte 51 in Eingriff bringbar.

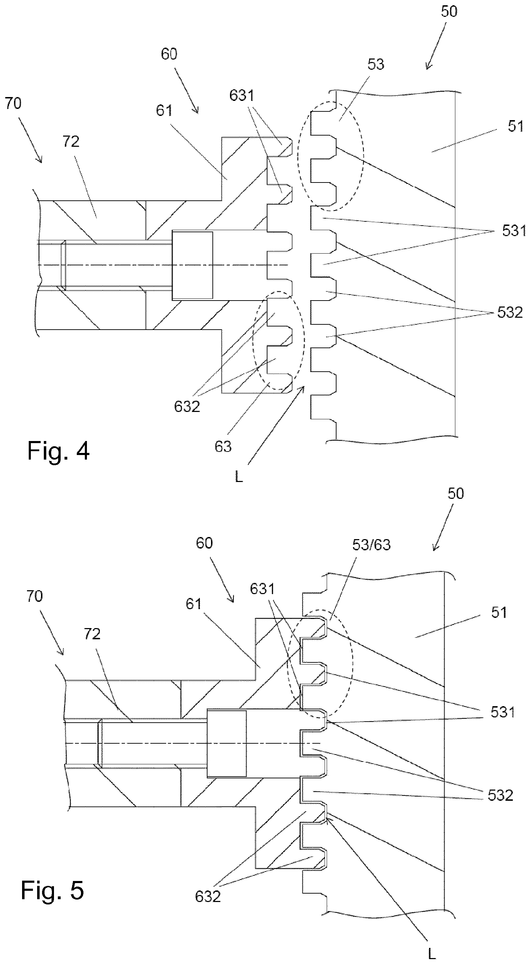

Durch das Verfahren des horizontalen Riegelelements 72 wird das Verriegelungselement 53 mit einem Verriegelungselement 63 in Eingriff gebracht. Am Verriegelungselement 63 sind ebenfalls Vorsprünge 631 und Vertiefungen 632 ausgebildet. Beim Ineingriffbringen der beiden Verriegelungselemente 53 und 63 greifen die Vorsprünge 631 des Riegels 61 in die Vertiefungen 532 der Platte 51 und die Vorsprünge 531 der Platte 51 in die Vertiefungen 632 des Riegels 61 ein (siehe Figuren 4 und 5).

Zwischen den Vorsprüngen 531 bzw.631 und den Vertiefungen 532 bzw. 632 ist in vertikaler Richtung ein variabler Luftspalt L vorgesehen. Der Luftspalt L ermöglicht eine so genannte schwimmende Lagerung der ersten Formenaufspannplatte 31. Bei einer beispielhaft ausgeführten Verzahnung mit einem Abstand von zwei benachbarten Vertiefungen 532 von etwa 7 mm und einer Höhe der Vorsprünge 631 von etwa 5 mm beträgt dabei der Luftspalt L erfindungsgemäß etwa 2 mm. Alternativ zur ersten Formenaufspannplatte 31 kann auch die zweite Formenaufspannplatte 41 schwimmend gelagert sein. Es sind auch feinere Verzahnungen mit einem Zahnabstand von 3 mm zwischen den Vorsprüngen 531 bzw.631 realisierbar.

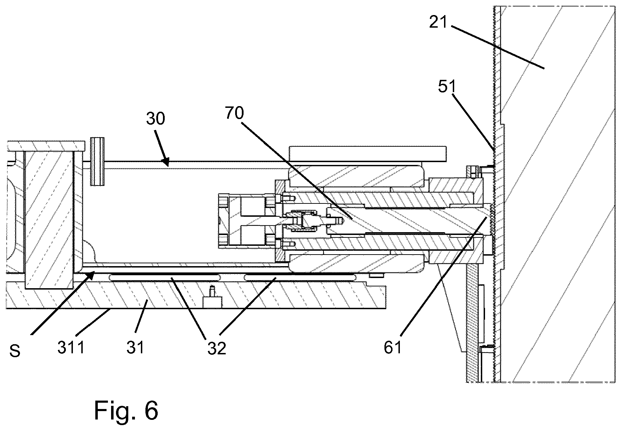

Je nach Werkzeughöhe wird die erste Formenaufspannplatte 31 auf eine bestimmte Höhe verfahren, so dass die die Verriegelungselemente 63 in die Verriegelungselemente 53 eingreifen können. Da die Verriegelungselemente 53 und 63 jedoch gleichmäßig voneinander beabstandet sind, ist die schwimmende Lagerung durch den Luftspalt L erforderlich, um die gewünschte nahezu stufenlose Einstellung der Werkzeughöhe zu ermöglichen. Der gewünschte Spalt S wird bei einer Fein-Positionierung durch wenigstens ein in Fig. 6 dargestelltes aufblasbares oder entlüftbares Druckluftkissen 32 eingestellt, das zwischen der Formenaufspannplatte 31 und dem diese tragenden oberen Formenträgeroberteil 30 und/oder zwischen der Formenaufspannplatte 41 und dem diese tragenden Formenträgerunterteil 40 wirksam ist. Der Sollwert für den jeweils erforderlichen Befüllungsgrad der Druckluftkissen 32 kann ebenfalls in einen Speicher 82 der speicherprogrammierbaren Steuerung (SPS) 80 übertragen werden.

In der Figur 3 ist ebenfalls deutlich zu erkennen, dass die Platte 51 des ersten Verriegelungsmittels 50 - ähnlich einer Zahnstange - wesentlich länger ist als der Riegel 61 des zweiten Verriegelungsmittels 60.

Die Figuren 4 und 5 zeigen eine schematische Schnittdarstellung durch die beiden Verriegelungsmittel 50 und 60 in einer unverriegelten bzw. einer verriegelten Position. Die Bezugszeichen entsprechen denen der vorher beschriebenen Figuren 1 bis 3.

### Bezugszeichenliste

- 10: Formenträgersystem

- 20: Rahmen
- 21: (erste) Portalstütze (von 20)
- 211: Innenseite (von 21)
- 212: Außenseite (von 21)
- 22: (zweite) Portalstütze (von 20)
- 221: Innenseite (von 22)
- 23: Joch
- 24: Antrieb (für 25 an 20)
- 25: Führungsschlitten
- 26: Laufschiene
- 27: Sensor
- 28: (untere) Traverse

- 30: Formenträgeroberteil
- 31: (erste) Formenaufspannplatte
- 311: Aufspannfläche (von 31)
- 312: Außenseite (von 31)
- 32: Druckluftkissen

- 40: Formenträgerunterteil
- 41: (zweite) Formenaufspannplatte
- 411: Aufspannfläche (von 41)

- 50: (erstes) Verriegelungsmittel (an 20)
- 51: Platte
- 53: Verriegelungselement
- 531: Vorsprung (von 53 an 51)
- 532: Vertiefung (von 53 an 51)
- 60: (zweites) Verriegelungsmittel (an 30)
- 61: Riegel
- 63: Verriegelungselement
- 631: Vorsprung (von 63 an 61)
- 632: Vertiefung (von 63 an 61)

- 70: Verriegelungsvorrichtung
- 72: Riegelelement (von 70)
- 74: Antrieb (für 72)
- 76: Zahnrad

- 80: (speicherprogrammierbare) Steuerung
- 82: Speicher (in 80)

- A: Abstand (zwischen 23 und 30 in der Verriegelungsposition)
- A30: Schwenkachse (von 30)
- A40: Schwenkachse (von 40)
- L: Luftspalt (zwischen 531 und 532 bzw. zwischen 631 und 632)
- S: Spalt (zwischen 31 und 30 bzw. 41 und 40)
- R70: Bewegungsrichtung (von 70)

## Patentansprüche

1. Formenträgersystem (10), umfassend einen portalartigen Rahmen (20), ein relativ zum Rahmen (20) bewegbares Formenträgeroberteil (30) mit einer ersten Formenaufspannplatte (31), ein Formenträgerunterteil (40) mit einer zweiten Formenaufspannplatte (41), erste, am Rahmen (20) vorgesehene Verriegelungsmittel (50) und zweite, am Formenträgeroberteil (30) vorgesehene Verriegelungsmittel (60) zum Verriegeln des Formenträgeroberteils (30) relativ zum Rahmen (20) in einer Verriegelungsposition, **wobei** die ersten Verriegelungsmittel (50) und/oder die zweiten Verriegelungsmittel (60) durch eine Vielzahl von gleichmäßig beabstandeten Verriegelungselementen (53; 63) gebildet werden, die in unterschiedlichen Verriegelungspositionen in Eingriff bringbar sind, **dadurch gekennzeichnet, dass für eine stufenlose Fein-Positionierung der ersten Formenaufspannplatte (31) und/oder der zweiten Formenaufspannplatte (41) am Formenträgeroberteil (30) und/oder am Formenträgerunterteil (40) wenigstens ein Druckluftkissen (32) vorgesehen ist.**

2. Formenträgersystem (10) nach Anspruch 1, **dadurch gekennzeichnet, dass** das erste Verriegelungsmittel (50) und das zweite Verriegelungsmittel (60) als Platte (51) und/oder als Riegel (61) ausgebildet ist, an welchen die Verriegelungselemente (53; 63) als Vorsprünge (531; 631) und Vertiefungen (532; 632) ausgebildet oder angeordnet sind, wobei in einer Verriegelungsposition die Vorsprünge (631) des Riegels (61) in die Vertiefungen (532) der Platte (51) und die Vorsprünge (531) der Platte (51) in die Vertiefungen (632) des Riegels (61) eingreifen.

3. Formenträgersystem (10) nach Anspruch 2, **dadurch gekennzeichnet, dass** zwischen den Vorsprüngen (531; 631) und Vertiefungen (532; 632) ein variabler Luftspalt (L) vorgesehen ist, der am Formenträgeroberteil (30) eine schwimmende Lagerung der ersten Formenaufspannplatte (31) und/oder am Formenträgerunterteil (40) eine schwimmende Lagerung der zweiten Formenaufspannplatte (41) für eine stufenlose Einstellung von Werkzeughöhen ermöglicht.

4. Formenträgersystem (10) nach einem der vorhergehenden Ansprüche, **dadurch gekennzeichnet, dass** die Verriegelungsmittel (53; 63) mittels einer Verriegelungsvorrichtung (70) in Eingriff bringbar sind.

5. Formenträgersystem (10) nach Anspruch 4, **dadurch gekennzeichnet, dass** die Verriegelungsvorrichtung (70) wenigstens ein horizontal bewegbares Riegelelement (72) umfasst.

6. Formenträgersystem (10) nach Anspruch 5, **dadurch gekennzeichnet, dass** das Riegelelement (72) mittels eines Antriebs (74) verfahrbar ist.

7. Formenträgersystem (10) nach Anspruch 6, **dadurch gekennzeichnet, dass** der Antrieb (74) von einem Elektromotor, einem Hydraulikzylinder oder einem Pneumatikzylinder gebildet ist.

8. Formenträgersystem (10) nach einem der vorhergehenden Ansprüche, **dadurch gekennzeichnet, dass** ein Sensor (27) zum Messen eines Abstands (A) zwischen der ersten Formenaufspannplatte (31) und dem Rahmen (20) vorgesehen ist.

9. Formenträgersystem (10) nach Anspruch 8, **dadurch gekennzeichnet, dass** der Sensor (27) mittels eines Lasers einen Sollwert für eine Verriegelungsposition der ersten Formenaufspannplatte (31) ermittelt.

10. Formenträgersystem (10) nach Anspruch 9, **dadurch gekennzeichnet, dass** der Sollwert durch ein manuelles Verfahren der ersten Formenaufspannplatte (31) gegen die zweite Formenaufspannplatte (41) in einem Kriechgang ermittelt und für folgende, automatisierte Verfahrvorgänge der ersten Formenaufspannplatte (31) als Sollwert in einen Speicher einer speicherprogrammierbaren Steuerung (SPS) übertragen wird.

11. Formenträgersystem (10) nach einem der vorhergehenden Ansprüche, **dadurch gekennzeichnet, dass** das Formenträgerunterteil (40) mit der zweiten Formenaufspannplatte (41) verfahrbar am Rahmen (20) gelagert ist.

## Claims

1. A mold support system (10) comprising a portal-like frame (20), a mold support upper part (30) movable relative to the frame (20) and having a first mold clamping plate (31), a mold support lower part (40) having a second mold clamping plate (41), first locking means (50) provided on the frame (20) and second locking means (60) provided on the mold support upper part (30) for locking the mold support upper part (30) relative to the frame (20) in a locking position, wherein the first locking means (50) and/or the second locking means (60) are formed by a plurality of equally spaced locking elements (53; 63) which can be brought into engagement in different locking positions, **characterized in that** at least one compressed air cushion (32) is provided for stepless fine positioning of the first mold clamping plate (31) and/or the second mold clamping plate (41) on the mold support upper part (30) and/or on the mold support lower part (40).

2. The mold support system (10) according to claim 1, **characterized in that** the first locking means (50) and the second locking means (60) are designed as a plate (51) and/or as a latch (61), on which the locking elements (53; 63) are designed or arranged as projections (531 ; 631) and recesses (532; 632), wherein in a locking position the projections (631) of the latch (61) engage in the recesses (532) of the plate (51) and the projections (531) of the plate (51) engage in the recesses (632) of the latch (61).

3. The mold support system (10) according to claim 2, **characterized in that** a variable air gap (L) is provided between the projections (531; 631) and recesses (532 ; 632), which air gap (L) allows a floating mounting of the first mold clamping plate (31) on the mold support upper part (30) and/or a floating mounting of the second mold clamping plate (41) on the mold support lower part (40) for a stepless adjustment of mold heights.

4. The mold support system (10) according to one of the preceding claims, **characterized in that** the locking means (53; 63) can be engaged by means of a locking device (70).

5. The mold support system (10) according to claim 4, **characterized in that** the locking device (70) comprises at least one horizontally movable locking element (72).

6. The mold support system (10) according to claim 5, **characterized in that** the locking element (72) is movable by means of a drive (74).

7. The mold support system (10) according to claim 6, **characterized in that** the drive (74) is formed by an electric motor, a hydraulic cylinder or a pneumatic cylinder.

8. The mold support system (10) according to one of the preceding claims, **characterized in that** a sensor (27) for measuring a distance (A) between the first mold clamping plate (31) and the frame (20) is provided.

9. The mold support system (10) according to claim 8, **characterized in that** the sensor (27) determines a setpoint for a locking position of the first mold clamping plate (31) by means of a laser.

10. The mold support system (10) according to claim 9, **characterized in that** the setpoint is determined by manually moving the first mold clamping plate (31) against the second mold clamping plate (41) in a creep gear and is transferred as a setpoint to a memory of a programmable logic controller (PLC) for subsequent, automated travel operations of the first mold clamping plate (31).

11. The mold support system (10) according to one of the preceding claims, **characterized in that** the mold support lower part (40) with the second mold clamping plate (41) is movably mounted on the frame (20).

## Revendications

1. Système de support de moule (10) comprenant un cadre en forme de portique (20), une partie supérieure de support de moule (30) mobile par rapport au cadre (20) avec une première plaque de serrage de moule (31), une partie inférieure de support de moule (40) avec une deuxième plaque de serrage de moule (41), des premiers moyens de verrouillage (50) prévus sur le cadre (20) et des deuxièmes moyens de verrouillage (50) prévus sur le cadre (20), des moyens de verrouillage (60) prévus sur la partie supérieure de support de moule (30) pour verrouiller la partie supérieure de support de moule (30) par rapport au cadre (20) dans une position de verrouillage, les premiers moyens de verrouillage (50) et/ou les seconds moyens de verrouillage (60) étant constitués d'une pluralité d'éléments de verrouillage (53 ; 63) configurés pour pouvoir être mis en prise dans différentes positions de verrouillage, **caractérisé en ce qu'**il est prévu au moins un coussin d'air comprimé (32) pour un positionnement fin continu de la première plaque de serrage de moule (31) et/ou de la deuxième plaque de serrage de moule (41) sur la partie supérieure de support de moule (30) et/ou sur la partie inférieure de support de moule (40).

2. Système de support de moule (10) selon la revendication 1, **caractérisé en ce que** le premier moyen de verrouillage (50) et le deuxième moyen de verrouillage (60) sont réalisés sous forme de plaque (51) et/ou de loquet (61), sur lesquels les éléments de verrouillage (53 ; 63) sont réalisés sous forme de saillies (531 ; 631) et des creux (532 ; 632) sont formés ou disposés, les saillies (631) du loquet (61) s'engageant dans les creux (532) de la plaque (51) et les saillies (531) de la plaque (51) s'engageant dans les creux (632) du loquet (61) dans une position de verrouillage.

3. Système de support de moule (10) selon la revendication 2, **caractérisé en ce qu'**il est prévu entre les saillies (531 ; 631) et les creux (532 ; 632) un entrefer variable (L) qui permet, sur la partie supérieure de support de moule (30), un montage flottant de la première plaque de serrage de moule (31) et/ou, sur la partie inférieure de support de moule (40), un montage flottant de la deuxième plaque de serrage de moule (41) pour un réglage en continu des hauteurs d'outil.

4. Système de support de moule (10) selon l'une des revendications précédentes, **caractérisé en ce que** les moyens de verrouillage (53 ; 63) sont configurés de façon à pouvoir être mis en prise au moyen d'un dispositif de verrouillage (70).

5. Système de support de moule (10) selon la revendication 4, **caractérisé en ce que** le dispositif de verrouillage (70) comprend au moins un élément de verrouillage (72) mobile horizontalement.

6. Système de support de moule (10) selon la revendication 5, **caractérisé en ce que** l'élément de verrouillage (72) est déplaçable au moyen d'un entraînement (74).

7. Système de support de moule (10) selon la revendication 6, **caractérisé en ce que** l'entraînement (74) est formé par un moteur électrique, un vérin hydraulique ou un vérin pneumatique.

8. Système de support de moule (10) selon l'une des revendications précédentes, **caractérisé en ce qu'**un capteur (27) est prévu pour mesurer une distance (A) entre la première plaque de serrage de moule (31) et le cadre (20).

9. Système de support de moule (10) selon la revendication 8, **caractérisé en ce que** le capteur (27) détermine au moyen d'un laser une valeur de consigne pour une position de verrouillage de la première plaque de serrage de moule (31).

10. Système de support de moule (10) selon la revendication 9, **caractérisé en ce que** la valeur de consigne est déterminée par un déplacement manuel de la première plaque de serrage de moule (31) contre la deuxième plaque de serrage de moule (41) dans un mouvement de fluage et est transférée dans une mémoire d'une commande programmable (SPS) en tant que valeur de consigne pour des processus de déplacement automatisés subséquents de la première plaque de serrage de moule (31).

11. Système de support de moule (10) selon l'une des revendications précédentes, **caractérisé en ce que** la partie inférieure de support de moule (40) avec la deuxième plaque de serrage de moule (41) est montée de manière mobile sur le cadre (20).
